# EUROPÄISCHE PATENTSCHRIFT

(11) **EP 3 081 813 B1**
(45) Veröffentlichungstag und Bekanntmachung des Hinweises auf die Patenterteilung: **20.09.2017**
(21) Anmeldenummer: 15163851.7
(22) Anmeldetag: 16.04.2015
(51) Int. Cl.: F04C 2/344, A22C 11/08

(54) **FÜLLMASCHINE UND VERFAHREN ZUM ABFÜLLEN PASTÖSER MASSE**
FILLING MACHINE AND METHOD FOR FILLING PASTE MASSES
MACHINE DE REMPLISSAGE ET PROCÉDÉ DE REMPLISSAGE D'UNE SUBSTANCE PÂTEUSE

(43) Veröffentlichungstag der Anmeldung: 19.10.2016
(73) Patentinhaber: Albert Handtmann Maschinenfabrik GmbH & Co. KG, 88400 Biberach (DE)
(72) Erfinder: Maile, Bernd, 88422 Oggelshausen (DE); Mantz, Paul, 89584 Ehingen (DE); Staudenrausch, Martin, 88400 Biberach (DE)
(74) Vertreter: Grünecker Patent- und Rechtsanwälte PartG mbB

(56) Entgegenhaltungen:
- EP-A1- 1 837 524
- EP-A1- 2 525 098
- EP-A1- 2 628 391
- DE-A1- 19 916 582
- DE-C1- 19 925 417

## Beschreibung

Die Erfindung betrifft eine Füllmaschine sowie ein Verfahren zum Abfüllen pastöser Masse gemäß den Oberbegriffen der Ansprüche 1 und 13. Bei der Wurstherstellung wird mit Hilfe einer Füllmaschine pastöse Masse über einen Trichter und eine Flügelzellenpumpe in ein Füllrohr geschoben, wobei die pastöse Masse dann beispielsweise aus dem Füllrohr in eine Wursthülle ausgestoßen wird. Um Lebensmittel, insbesondere pastöse Masse, wie Brät, haltbar zu machen, wird diesen Massen möglichst viel Luft entzogen. Dazu wird eine Vakuumpumpe an die Flügelzellenpumpe für die pastöse Masse angeschlossen, um die Flügelzellen der Flügelzellenpumpe zu evakuieren. Entsprechende Füllmaschinen bzw. Flügelzellenpumpen sind beispielsweise in der EP 1 044 612 sowie EP 1 837 524 gezeigt. Die Fig. 11 zeigt einen Querschnitt durch eine entsprechende Flügelzellenpumpe. Hier wird deutlich, dass in der Seitenwand der Flügelzellenpumpe eine Evakuierungsöffnung vorgesehen ist, die über einen Kanal zur Vakuumpumpe führt.

Beim Evakuieren der Förderzellen kommt es jedoch vor, dass Bestandteile der pastösen Masse in Richtung Vakuumpumpe mitgerissen werden. Aus diesem Grund ist ein Sammelbehälter zwischen Förderpumpe und Vakuumpumpe vorgesehen, um mitgerissene pastöse Masse, Schmutz und Wasser zu sammeln. Auch beim Reinigen der Flügelzellenpumpe geraten Bestandteile der geförderten Masse, Wasser und Schmutz in diesen Sammelbehälter. Somit kann die Vakuumpumpe und auch ein davor geschalteter Luftfilter geschützt werden.

Der Sammelbehälter muss in regelmäßigen Zeitabständen geleert und gereinigt werden, um die Ausbreitung von krankheitserregenden Organismen und unangenehmen Gerüchen zu verhindern. Außerdem muss verhindert werden, dass die im Sammelbehälter gesammelte Masse einen bestimmten Füllstand übersteigt, d.h., es muss verhindert werden, dass die Vakuumverbindung von Förderpumpe zur Vakuumpumpe unterbrochen wird (wenn beispielsweise die gesammelte Masse den Sammelbehälter vollständig füllt und bereits in die Vakuumleitungen aufsteigt, so dass die Vakuumleitungen verstopfen). Sonst kommt es zu einem unerwünschten Druckanstieg in den Förderzellen. Darüber hinaus muss auch der Vakuumkanal zwischen Förderwerk und Sammelbehälter regelmäßig gereinigt werden.

Bei den herkömmlichen Füllmaschinen ist es im betriebsbereiten Zustand nicht möglich, den Vakuumkanal zu inspizieren um zum richtigen Zeitpunkt zu entscheiden, ob der Vakuumkanal gereinigt werden muss.

Die Zugänglichkeit zum Vakuumkanal ist bisher nur von der Oberseite des geöffneten Förderwerks möglich. Das heißt, dass, wenn z.B. ein verstopfter Vakuumkanal gereinigt werden muss, zunächst der Fülltrichter der Füllmaschine entleert werden muss, um dann das Schwenkgehäuse, an dem der Fülltrichter befestigt ist und an dessen unterem Ende sich der Deckel der Flügelzellenpumpe befindet, nach oben zu klappen. Eine Kontrolle des Vakuumkanals ist kaum möglich, eine Kontrolle des Sammelbehälters ist umständlich, da hier z.B. der Sammelbehälter hinter einer Klappe zu inspizieren ist, wobei zur Inspektion das Vakuum abzuschalten ist. Selbst bei geöffneter Flügelzellenpumpe kann der Vakuumkanal und/oder der Sammelbehälter nicht ausreichend kontrolliert werden.

Bei den herkömmlichen Füllmaschinen befindet sich die Öffnung zum Evakuieren der Flügelzellen in der Seitenwand des Pumpengehäuses. Bedingt durch einen radialen Dichtspalt zwischen Flügel und Flügelzellenpumpengehäuse wird vom Rotor sowie dem Pumpenflügel pastöse Masse in den Evakuierungsbereich, d.h. den Bereich, in dem die Evakuierungsöffnung angeordnet ist, mitgeschleppt. Dieses mitgeschleppte Material setzt sich dann an der seitlichen Pumpenwand im Evakuierungsbereich, insbesondere an den Kanten der Evakuierungsöffnung ab und verschließt mit der Zeit die Evakuierungsöffnung in der Pumpenwand. Darüber hinaus ist es möglich, dass die pastöse Masse dann auch in den Vakuumkanal und Sammelbehälter mitgeschleppt wird. Der Kanal kann somit verstopfen, so dass sowohl die Evakuierung als auch die Portionsgenauigkeit schlechter werden.

Hiervon ausgehend liegt der vorliegenden Erfindung die Aufgabe zugrunde, eine Füllmaschine und ein Verfahren zum Abfüllen bereitzustellen, die es ermöglichen, die Flügelzellenkammern und somit auch das Produkt dauerhaft sicher und zuverlässig zu evakuieren.

Erfindungsgemäß wird diese Aufgabe durch die Merkmale der Ansprüche 1 und 13 gelöst.

Gemäß der vorliegenden Erfindung befindet sich nun die Evakuierungsöffnung im Pumpendeckel, d.h. dass nach oben abgesaugt wird, bzw. die Flügelzellen nach oben hin entlüftet werden, so dass durch den Pumpendeckel hindurch abgesaugt wird. Die Evakuierungsöffnung ist im Vakuumbereich angeordnet und öffnet sich in die Flügelzellenkammer. Die Flügelzellen bewegen sich unter der Evakuierungsöffnung vorbei. Immer wenn ein Pumpenflügel unter der Evakuierungsöffnung durchfährt, wird die pastöse Masse, falls doch etwas am Pumpendeckel abgelagert wurde, vom Pumpenflügel mitgenommen und die Bohrung somit freigehalten. Das Freihalten der Evakuierungsöffnung am Pumpendeckel ist möglich, weil der Spalt zwischen Pumpenflügel und Pumpendeckel deutlich kleiner ist als der radiale Spalt zwischen Pumpenwand und Pumpenflügel. Somit wird ein Verstopfen der Evakuierungsöffnung durch mitgeschleppte pastöse Masse vermieden. Darüber hinaus kann auch die Menge an Masse, die durch eine Vakuumleitung von der Evakuierungsöffnung in Richtung Vakuumpumpe geschleppt wird, deutlich reduziert werden, so dass der notwendige Reinigungsaufwand deutlich reduziert werden kann. Somit kann dauerhaft eine ausreichende Evakuierung der Flügelzellen gewährleistet werden, so dass auch eine ausreichende und exakte Evakuierung der pastösen Masse bei hoher Portionsgenauigkeit gewährleistet werden kann, d. h. es kann über einen längeren Zeitraum prozesssicher produziert werden. Es sind keine zusätzlichen Teile wie z.B. Abstreifbleche etc. notwendig. Gemäß der Erfindung kann ein Unterdruck in den Flügelzellen erzeugt werden, unabhängig von Verunreinigungen und Ablagerungen an den Seitenwandungen der Flügelzellenpumpe. Am Deckel anhaftende Masse kann einfach vom Pumpenflügel abgestreift werden, so dass die Bohrung freigeräumt wird. Dadurch, dass sich die Öffnung oben befindet, können schwerkraftsbedingt keine Verunreinigungen in die Öffnung hineinfallen. Darüber hinaus ermöglicht die erfindungsgemäße Evakuierungsöffnung auch eine separate Zugangsmöglichkeit von oben, beispielsweise von oben durch den Deckel der Flügelzellenpumpe oder durch ein Schwenkgehäuse und den Deckel hindurch, ohne dass die Flügelzellenpumpe geöffnet werden muss.

Die Evakuierungsöffnung ist über eine Vakuumleitung mit der Vakuumpumpe verbunden. Das heißt, dass von der Evakuierungsöffnung eine vakuumdichte Leitung zur Vakuumpumpe führt. Dazu sind unterschiedliche Leitungsabschnitte druckdicht miteinander verbunden bzw. abgedichtet.

Die Vakuumleitung umfasst z.B. einen Kanalabschnitt im Deckel sowie eine Aussparung. Die Aussparung kann im Deckel und/oder im Schwenkgehäuse, an dem der Deckel angeordnet ist, ausgebildet sein. Die Aussparung kann vorzugsweise eine größere Querschnittsfläche als der Kanalabschnitt aufweisen. Vorzugsweise ist im oberen Bereich der Aussparung eine Inspektionsöffnung angeordnet, durch die die Evakuierungsöffnung und/oder der Kanalabschnitt, der in Verbindung mit der Evakuierungsöffnung steht, inspizierbar ist. Somit kann auf einfache Art und Weise von oben der Verschmutzungsgrad der Evakuierungsöffnung bzw. des Kanalabschnitts inspiziert werden, ohne dass der Deckel der Füllmaschine geöffnet werden muss.

Die Vakuumleitung kann auch einen Kanal aufweisen, der mit einem Ende mit einem Sammelbehälter für mitgerissene pastöse Masse verbunden ist. Sein anderes Ende kann in die Aussparung, insbesondere in deren unteren Bereich münden. Somit ist die Flügelzellenpumpe z.B. über die Evakuierungsöffnung, den Kanalabschnitt, die Aussparung sowie den weiteren Kanal mit dem Sammelbehälter verbunden.

Diese Anordnung kann derart ausgebildet sein, dass auch der Kanal und/oder der Sammelbehälter bei geschlossenem Deckel durch die Inspektionsöffnung inspizierbar sind. Die Inspektionsöffnung ist dabei nach oben gerichtet, so dass ein Bediener den Verschmutzungsgrad von oben inspizieren kann. Vorteilhafterweise kann der Bediener über die Inspektionsöffnung sowohl den Kanal zum Sammelbehälter und/oder den Sammelbehälter sowie auch die Evakuierungsöffnung und/oder den Kanalabschnitt zur Evakuierungsöffnung inspizieren. Somit kann auf einfache Art und Weise der Verschmutzungsgrad ermittelt werden. Darüber hinaus bietet die Inspektionsöffnung auch einen Zugang zu den entsprechenden Abschnitten der Vakuumleitung um die entsprechenden Abschnitte zu reinigen, ohne dass aufwändige Maßnahmen notwendig sind. Dieses Ausführungsbeispiel bringt also den Vorteil mit sich, dass beim Überprüfen der Verschmutzung die Flügelzellenpumpe nicht geöffnet werden muss, so dass beispielsweise ein Deckel der Flügelzellenpumpe zusammen mit einem Schwenkgehäuse und einem darauf angeordneten Trichter nicht verschwenkt werden muss. Der Trichter muss dazu auch nicht extra geleert werden.

Gemäß einer bevorzugten Ausführungsform der vorliegenden Erfindung ist die Inspektionsöffnung z.B. in einem Deckel der Flügelzellenpumpe angeordnet. Dies ist dann der Fall, wenn bei bestimmten Maschinentypen das Schwenkgehäuse, auf dem der Trichter angeordnet ist und an dessen Unterseite der Deckel befestigt ist, kleiner ist als der Deckel, derart, dass der Deckel über das Schwenkgehäuse vorsteht. Es ist aber auch möglich, dass die Inspektionsöffnung sich im Schwenkgehäuse befindet und dass dann zumindest im Schwenkgehäuse eine entsprechende Aussparung vorgesehen ist, in die sowohl der Kanal zum Sammelbehälter, als auch der Kanalabschnitt zur Evakuierungsöffnung münden können. Um die freie Einsehbarkeit zum Sammelbehälter und zur Evakuierungsöffnung zu gewährleisten, muss es jeweils zumindest einen geraden Strahlengang geben, der die Inspektionsöffnung mit dem Einlass zum Sammelbehälter verbindet oder mit der Evakuierungsöffnung.

Vorteilhafterweise ist die Inspektionsöffnung verschließbar ausgebildet. Die Inspektionsöffnung kann mit Hilfe eines Verschlusselementes verschlossen und vorzugsweise auch wieder geöffnet werden. Vorzugsweise ist das Verschlusselement als axial beweglicher Kolben ausgebildet. Das Verschlusselement kann auch ein Schauglas aufweisen, so dass der Bediener auch während eines laufenden Prozesses durch das Schauglas den Kanal und/oder den Sammelbehälter bzw. den Kanalabschnitt und/oder die Evakuierungsöffnung inspizieren kann und sofort auf übermäßige Verschmutzung aufmerksam wird.

Vorteilhafterweise ist der Kolben in der Aussparung axial beweglich angeordnet, derart, dass er in einer unteren Position entweder den Kanal, der mit dem Sammelbehälter verbunden ist und/oder den weiteren Kanalabschnitt, der zur Evakuierungsöffnung führt, verschließt, d.h. den Kanal von dem weiteren Kanalabschnitt abtrennt.

Der axial bewegliche Kolben kann auch komplett aus der Aussparung entfernt werden, damit beispielsweise der Kanal besser inspiziert und gereinigt werden kann. Ferner ist es möglich, den axial beweglichen Kolben so weit nach oben zu bewegen, dass der Kanal und der weitere Kanalabschnitt belüftet werden können. Im eingesetzten Zustand dichtet der Kolben die Aussparung nach außen ab. Der Kolben kann vorzugsweise manuell axial bewegt werden, beispielsweise mit Hilfe eines Gewindes, Bajonettverschlusses, Kniehebels, etc.

Es ist aber auch möglich, einen angetriebenen Verschlusszylinder vorzusehen, der die Vakuumverbindung zwischen Vakuumpumpe und der Flügelzellenpumpe trennt, wobei der Verschlusszylinder vorzugsweise von einer Position in Vertikalrichtung betrachtet unterhalb des Deckels in die Vakuumleitung, d.h. in den Kanal eingefahren wird.

Gemäß einer bevorzugten Ausführungsform ist im Verschlusselement und/oder im Deckel der Flügelzellenpumpe mindestens ein Sensor integriert, insbesondere zum Messen der Temperatur und/oder des Drucks und/oder der Dichte und/oder des Luftgehalts. Auch ein optischer Sensor kann im Verschlusselement integriert sein, der beispielsweise den Kanal und/oder den Sammelbehälter und/oder den Kanalabschnitt und/oder die Evakuierungsöffnung optisch erfasst und auf einem Display darstellt. Die Sensorsignale können der Steuerung der Füllmaschine zugeführt und dort ausgewertet werden und zur automatischen Prozessüberwachung und Optimierung dienen.

Der Vakuumkanal ist in einem Bereich zwischen Deckel und Schwenkgehäuse abgedichtet. Das heißt, dass entweder eine Dichteinrichtung zwischen Deckel und Schwenkgehäuse vorgesehen ist, oder dass beispielsweise eine Rohrleitung druckdicht von der Evakuierungsöffnung durch Deckel und Schwenkgehäuse führt.

Der Sensor ist vorzugsweise ein Drucksensor, der vorzugsweise im Verschlusselement angeordnet ist. Er kann ein in Abhängigkeit des Drucks in der Flügelzellenkammer bewegliches Anzeigeelement umfassen. Das heißt, dass sich das Anzeigeelement in Vertikalrichtung in Abhängigkeit des Drucks aus dem Verschlusselement nach oben und auch in das Verschlusselement nach unten bewegt, so dass ein Bediener auf einfache Art und Weise den Druckzustand in der Flügelzellenkammer überwachen kann. Dabei ist das Anzeigeelement insbesondere als höhenverstellbarer Stößel ausgebildet. Das Anzeigeelement ist vorteilhafterweise im oberen Bereich eines Kanals in dem Verschlusselement angeordnet und wird durch eine Feder in einer bestimmten Position gehalten, wobei sich das Anzeigeelement bei sinkendem Druck in der Flügelzellenpumpe gegen die Federkraft nach unten bewegt. Das Anzeigeelement kann sich bei erhöhtem Druck über die Oberfläche des Verschlusselementes erstrecken, so dass der Bediener die Position des Anzeigeelements einfach erkennen kann. Die Stößelposition kann auch sensorisch erfasst werden und das Signal der Steuerung zugeführt und von dieser ausgewertet werden.

Bei dem erfindungsgemäßen Verfahren zum Abfüllen pastöser Masse werden die leeren, zum Einlass der Flügelzellenpumpe rücklaufenden Flügelzellen über eine Evakuierungsöffnung im Deckel des Gehäuses der Flügelzellenpumpe evakuiert.

Gemäß einer bevorzugten Ausführungsform ist in der zum Pumpeninnraum gewandten ebenen Fläche des Deckels eine nutförmige Vertiefung im Vakuumbereich ausgebildet und die Evakuierungsöffung ist außerhalb der Vertiefung im Vakuumbereich angeordnet.

Die vorliegende Erfindung wird nachfolgend unter Bezugnahme folgender Figuren näher erläutert.
- Fig. 1: zeigt grob schematisch eine Seitenansicht einer Füllmaschine gemäß einem Ausführungsbeispiel der vorliegenden Erfindung.
- Fig. 2: zeigt schematisch in perspektivischer Darstellung eine Flügelzellenpumpe.
- Fig. 3: zeigt grob schematisch einen Schnitt durch einen Teil einer Füllmaschine gemäß einem Ausführungsbeispiel der vorliegenden Erfindung.
- Fig. 4: zeigt einen Längsschnitt durch einen Teil einer Füllmaschine gemäß einem weiteren Ausführungsbeispiel der vorliegenden Erfindung in Evakuierungsposition.
- Fig. 5: zeigt das in Fig. 4 gezeigte Ausführungsbeispiel mit geschlossenem Verschlusszylinder.
- Fig. 6: zeigt das in Fig. 4 und 5 gezeigte Ausführungsbeispiel mit geöffnetem Verschluss in Belüftungsposition.
- Fig. 7: zeigt die in Fig. 4 bis 6 gezeigten Ausführungsbeispiele mit entnommenem Verschlusselement.
- Fig. 8: zeigt einen Querschnitt durch eine Flügelzellenpumpe gemäß der vorliegenden Erfindung.
- Fig. 9: zeigt einen Schnitt entlang der Linie I-I in Fig. 8.
- Fig. 10: zeigt den Verlauf des Kanals zwischen Sammelbehälter und Inspektionsöffnung.
- Fig. 11: zeigt einen Teilquerschnitt durch eine Flügelzellenpumpe gemäß dem Stand der Technik.
- Fig. 12: zeigt grob schematisch eine Ausführungsform der vorliegenden Erfindung

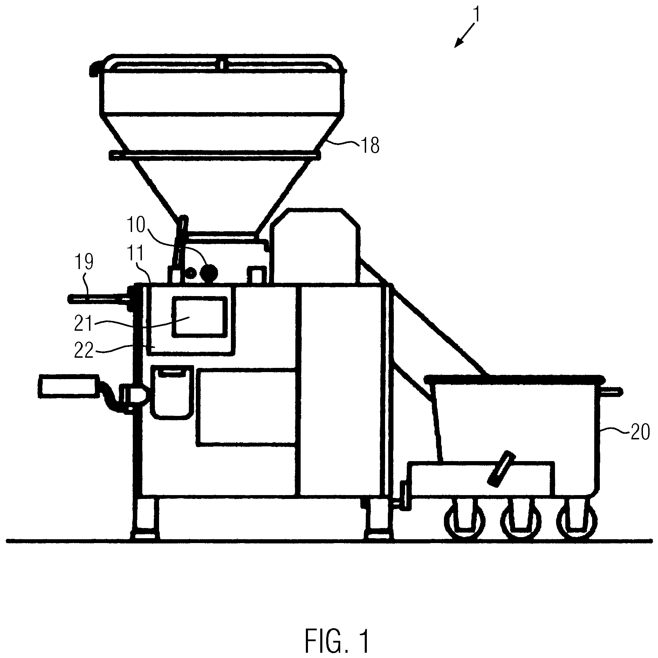

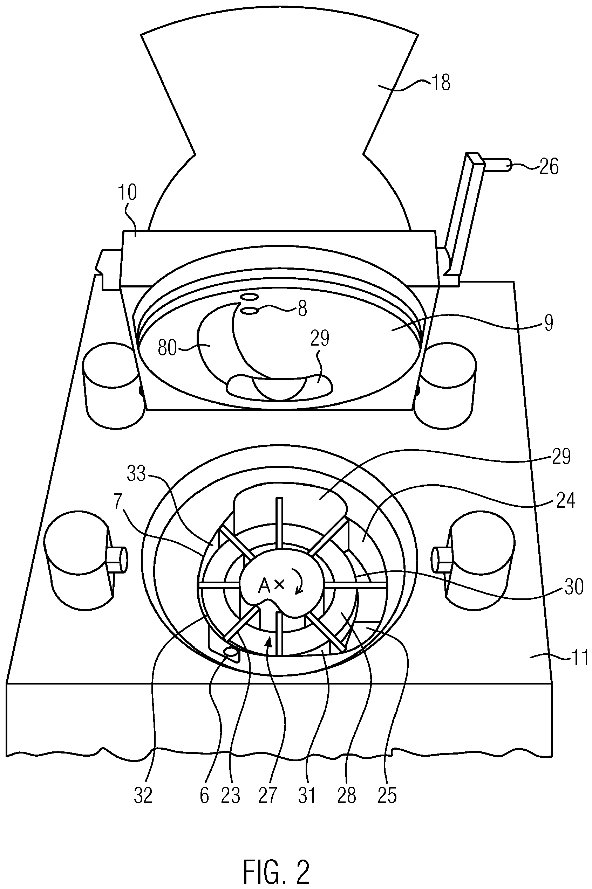

Fig. 1 zeigt grob schematisch eine Seitenansicht einer Füllmaschine gemäß der vorliegenden Erfindung. Die Füllmaschine 1 weist einen Trichter 18 auf, zur Aufnahme von pastöser Masse. Dieser Trichter 18 ist, wie auch aus Fig. 2 hervorgeht, auf einem Schwenkgehäuse 10 angeordnet derart, dass das Schwenkgehäuse einschließlich eines Deckels 9 einer Flügelzellenpumpe 2 zum Öffnen der Flügelzellenpumpe 2 verschwenkt werden kann. Die Flügelzellenpumpe 2 ist unterhalb des Trichters angeordnet. Die Füllmaschine 1 weist weiter ein Füllrohr 19 auf. Die pastöse Masse wird durch die Flügelzellenpumpe 2 in das Füllrohr 19 geschoben und dann in bekannter Weise beispielsweise in Wursthüllen ausgestoßen. Die Füllmaschine weist weiter eine Steuerung 22 auf, sowie ein Display 21. In dieser Ausführungsform weist die Füllmaschine noch eine Hubeinrichtung auf mit einem Brätwagen 20, über die die pastöse Masse angehoben und in den Trichter 18 gekippt werden kann. Die Füllmaschine weist ein Maschinengehäuse 11 auf, in dem die Flügelzellenpumpe 2 angeordnet ist.

Fig. 2 zeigt den Aufbau der Flügelzellenpumpe 2 in größerem Detail. Die Flügelzellenpumpe hat eine seitliche Gehäusewand 24 sowie eine Bodenplatte 25 und ist mit dem Deckel 9 nach oben abschließbar. In der Fig. 2 dargestellten Lage ist die Flügelzellenpumpe beispielsweise zu Reinigungszwecken geöffnet, so dass der Innenraum des Förderwerks zu sehen ist.

Zum Schließen kann der um eine an der Maschinengehäuseoberseite angebrachte Drehachse schwenkbare Deckel mittels Hebel 26 in die Betriebsposition nach unten verschwenkt werden. In dem Innenraum 27 ist ein exzentrisch angeordneter, in Drehung versetzbarer Rotor 28 vorgesehen. In dem Rotor 28 befinden sich die radial verschiebbaren Flügel 23, die mit der Gehäusewand 24 der Flügelzellenpumpe, dem Boden und dem Deckel 9 und der Außenfläche des Rotors 28 Flügelzellen bilden und im abdichtenden Sinn zusammenwirken. Die Flügelzellenpumpe weist weiter einen Bräteinlass 29 und einen Brätauslass 31 auf. An dem Bräteinlass 29 schließt sich in Drehrichtung A gesehen ein Druckbereich 30 an, in dem sich die Flügelzellen 7 in ihrem Volumen verkleinern. Dieser Druckbereich mündet in den Brätauslass 31, der zu einem nicht dargestellten Auslaufrohr führt. Dem Brätauslass 31 folgt in Drehrichtung D gesehen ein Abdichtbereich 32, in dem die Außenfläche des Rotors 28 in direktem Kontakt mit der Innenwand des Pumpengehäuses kommt.

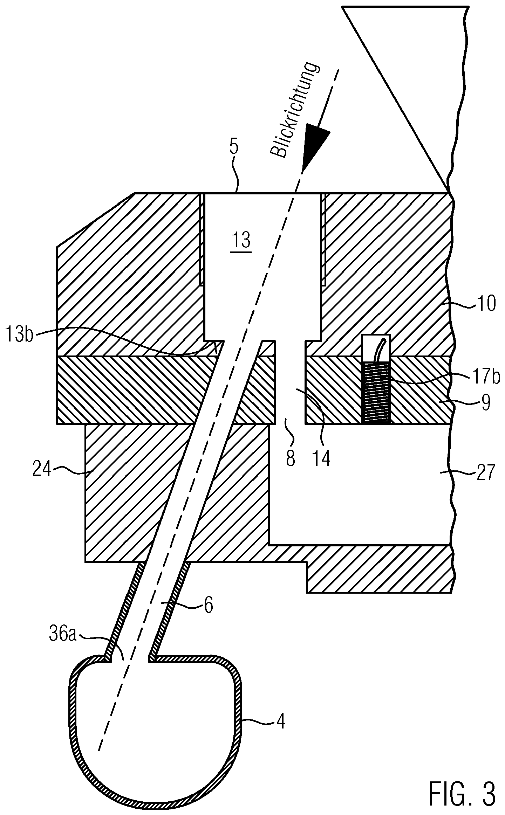

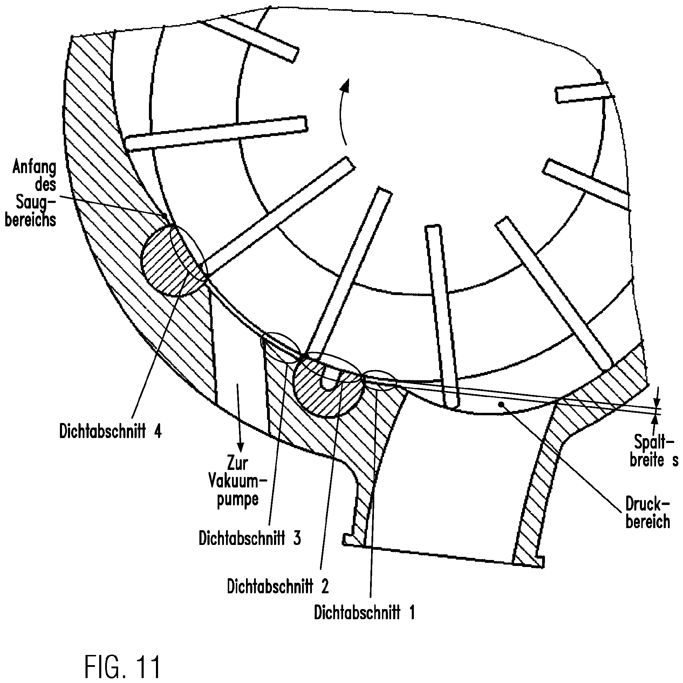

An den Abdichtbereich schließt sich der Vakuum- oder Saugbereich 33 an, der bis zum Bräteinlass 29 reicht. In diesem Vakuum- bzw. Saugbereich wird in den Flügelzellenkammern 7 ein Unterdruck erzeugt, der das Einfüllen der pastösen Masse erleichtert und dazu dient, dass der pastösen Masse möglichst viel Luft entzogen werden kann. Zum Evakuieren der Flügelzellen 7 in diesem Vakuumbereich 33 (siehe hierzu auch Fig. 11 ist eine Evakuierungsöffnung 8 vorgesehen, über die mit Hilfe einer Vakuumpumpe 3, wie beispielsweise in Fig. 3 dargestellt ist, die Flügelzellen 7 evakuiert werden können, d.h. z.B. der Druck in den Flügelzellen verringert wird.

Bei dem in Fig. 2 gezeigten Ausführungsbeispiel ist die Evakuierungsöffnung 8 im Deckel der Flügelzellenpumpe 2 angeordnet. Dazu kann eine entsprechende Bohrung im Deckel 9 vorgesehen. Die Querschnittsfläche der Evakuierungsöffnung liegt typischerweise in einem Bereich von 1cm² - 30 cm². Die Evakuierungsöffnung öffnet sich in die Flügelzellenkammer. Die Flügelzellen bewegen sich unter der Evakuierungsöffnung vorbei.

In der nach unten gewandten Fläche des Deckels 9 kann eine nutförmige Vertiefung 80 vorgesehen sein.

Die Vertiefung 80 verläuft bei geschlossenem Deckel über den Flügelzellen im Vakuumbereich, derart, dass ein Spalt zwischen den Oberseiten der Flügel und der nach unten gewandten ebenen Fläche des Deckels 9 entsteht. Somit kann ein Druckausgleich zwischen den überdeckten benachbarten Flügelzellen erfolgen. Wesentlich ist, dass bei einem solchen Ausführungsbeispiel die Evakuierungsöffnung 8 außerhalb der nutförmigen Vertiefung in der nach unten gewandten ebenen Oberfläche des Deckels 9 im Saug- bzw. Vakuumbereich liegt.

Immer wenn ein Pumpenflügel unter der Evakuierungsöffnung durchfährt, wird die pastöse Masse, falls doch etwas am Pumpendeckel abgelagert wurde, vom Pumpenflügel mitgenommen und die Bohrung somit freigehalten. Das Freihalten der Evakuierungsöffnung am Pumpendeckel ist möglich, weil der Spalt zwischen Pumpenflügel und Pumpendeckel deutlich kleiner ist als der radiale Spalt zwischen Pumpenwand und Pumpenflügel. Somit wird ein Verstopfen der Evakuierungsöffnung durch mitgeschleppte pastöse Masse vermieden. Darüber hinaus kann auch die Menge an Masse, die durch eine Vakuumleitung von der Evakuierungsöffnung in Richtung Vakuumpumpe geschleppt wird, deutlich reduziert werden, so dass der notwendige Reinigungsaufwand deutlich reduziert werden kann. Somit kann dauerhaft eine ausreichende Evakuierung der Flügelzellen gewährleistet werden, so dass auch eine ausreichende und exakte Evakuierung der pastösen Masse bei hoher Portionsgenauigkeit gewährleistet werden kann. Es sind keine zusätzlichen Teile wie z.B. Abstreifbleche etc. notwendig. Gemäß der Erfindung kann ein Unterdruck in den Flügelzellen erzeugt werden, unabhängig von Verunreinigungen und Ablagerungen an den Seitenwandungen der Flügelzellenpumpe. Am Deckel anhaftende Masse kann einfach vom Pumpenflügel abgestreift werden, so dass die Bohrung freigeräumt wird. Dadurch, dass sich die Öffnung oben befindet, können schwerkraftbedingt keine Verunreinigungen in die Öffnung hineinfallen. Darüber hinaus ermöglicht die erfindungsgemäße Evakuierungsöffnung auch eine separate Zugangsmöglichkeit von oben, beispielsweise von oben durch den Deckel der Flügelzellenpumpe oder durch ein Schwenkgehäuse und den Deckel hindurch, ohne dass die Flügelzellenpumpe geöffnet werden muss. Die Evakuierungsöffnung ermöglicht auch einen seitlichen Zugang.

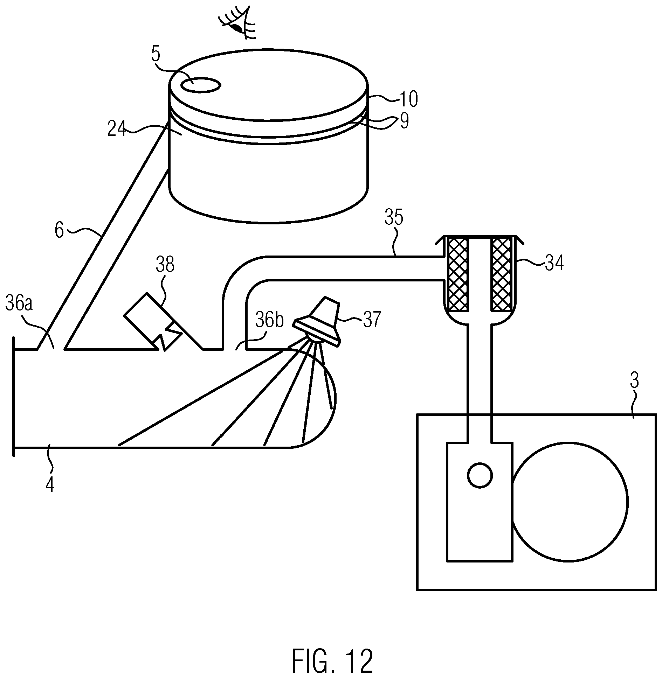

Bei dem in Fig. 12 gezeigten Ausführungsbeispiel ist die Flügelzellenpumpe nur grob schematisch mit geschlossenem Deckel gezeigt. Ein Kanal 6 ist mit der nicht dargestellten Evakuierungsöffnung 8 verbunden und mündet in einen Sammelbehälter 4 für mitgerissene pastöse Masse. In dem Sammelbehälter 4 können mitgerissene pastöse Masse, Schmutz und Wasser gesammelt werden. Auch beim Reinigen der Flügelzellenpumpe geraten Bestandteile der geförderten Masse in diesen Sammelbehälter. Somit kann die Vakuumpumpe 3 und ein optional vorgesehener Luftfilter 34, der über eine Leitung 35 mit dem Sammelbehälter 4 verbunden ist, wirksam geschützt werden.

Der Füllstand in dem Sammelbehälter 4 darf nicht so hoch werden, dass die Öffnungen 36a und 36b zu dem Kanal 6 bzw. zu der Leitung 35 zum Luftfilter hin verstopfen, da sonst kein Vakuum mehr in den Flügelzellen 7 erzeugt werden kann. Außerdem darf auch der Kanal 6 nicht stark verschmutzen oder verstopfen, damit sichergestellt werden kann, dass ein ausreichendes Vakuum erzeugt wird. Bislang konnte man die Verschmutzung des Kanals 6 bzw. des Sammelbehälters 4 nur bei abgeschaltetem Vakuum inspizieren, indem man eine Klappe, die den Sammelbehälter nach außen abdichtet, geöffnet hat.

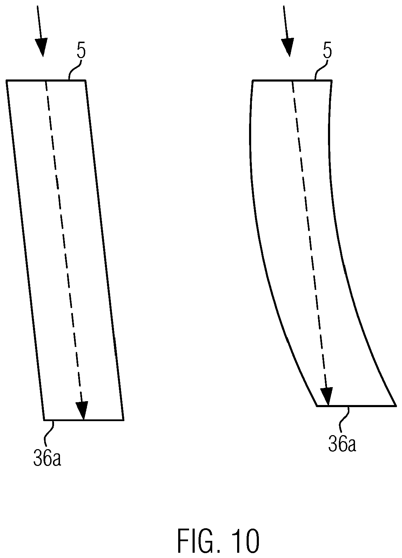

Gemäß einer bevorzugten Ausführungsform der vorliegenden Erfindung ist nun eine Inspektionsöffnung 5 vorgesehen, die über einen Kanal 6 mit dem Sammelbehälter 4 verbunden ist, zum Inspizieren des Kanals und/oder des Sammelbehälters und/ oder der Evakuierungsöffnung 8 und/ oder des sich an die Evakuierungsöffnung anschließenden Kanalabschnitts . Wie durch das Auge in Fig. 12 verdeutlicht wird, kann über die Inspektionsöffnung 5 das Innere des Kanals 6 inspiziert werden, wobei die Einsehbarkeit durch den Kanal bis zum Sammelbehälter 4 gegeben ist. Somit kann auf einfache Art und Weise erkannt werden, ob es Verunreinigungen im Kanal 6 gibt, und ob der Kanal 6 verstopft ist, oder ob der Sammelbehälter 4 zu voll ist. Um eine Einsehbarkeit zu gewähren, sollte der Kanal im Wesentlichen gerade, insbesondere unter einem Winkel von 0°. bis 45°, insbesondere 0° - 15° zur vertikalen Längsachse der Füllmaschine von der Seitenwand 24 der Flügelzellenpumpe 2 abzweigen. Unter "im Wesentlichen gerade" versteht man in dieser Anmeldung, dass der Kanal entweder gerade ist oder aber die Krümmung bzw. Abweichung von einem geraden Verlauf des Kanals so klein ist, dass von der Inspektionsöffnung 5 aus der Einlass 36a des Sammelbehälters zumindest teilweise erkannt werden kann, d. h., dass es zumindest einen geraden Strahlengang gibt, der die Inspektionsöffnung mit dem Einlass 36a zum Sammelbehälter verbindet, wie insbesondere aus der Fig. 10 hervorgeht. Damit man auch von der Inspektionsöffnung zur Evakuierungsöffnung schauen kann muss es auch hier zumindest einen geraden Strahlengang geben, der die Inspektionsöffnung 5 mit der Evakuierungsöffnung verbindet. Somit kann der Bediener einfach durch den Kanal 6 bis zum Sammelbehälter durchschauen und auch bis zur Evakuierungsöffnung.

Es ist besonders vorteilhaft, wenn der Kanal 6 zumindest abschnittsweise aus transparentem Material ausgebildet ist, z. B. als transparenter Schlauch und/oder auch der Sammelbehälter zumindest abschnittsweise aus einem transparenten Material ausgebildet ist, derart, dass Licht von außen durch das Material scheinen kann. Dazu kann mindestens eine Beleuchtung 37, z.B. in Form eines LED Strahlers den Kanal 6 und/oder den Sammelbehälter 4 von außen beleuchten. Werden Kanal 6 und/oder der Sammelbehälter 4 von außen beleuchtet, so können Verunreinigungen besonders gut erfasst und erkannt werden. Ist beispielsweise der Kanal 6 verstopft, so erscheint ein dunkler Fleck. Zusätzlich kann eine Kamera 38 (z.B. in einer Aussparung oder hinter einer Scheibe außerhalb des Sammelbehälters in einer Position über dem höchsten Füllstand im Sammelbehälter 4) angeordnet sein, um den Innenraum des Sammelbehälters 4 aufzunehmen und beispielsweise auf einem Display, z. B. Display 21, darzustellen. Dies ermöglicht eine zusätzliche Überwachungsmöglichkeit. Die Beleuchtungseinrichtung ist beispielsweise ein LED-Strahler.

Die nachfolgenden Ausführungsbeispiele entsprechen im Wesentlichen dem in Fig. 12 gezeigten Ausführungsbeispiel mit der Ausnahme, dass zusätzlich ein Schwenkgehäuse 10 dargestellt ist, wobei sich auch hier die Inspektionsöffnung außerhalb der Flügelzellenpumpe befindet und nach außen gerichtet ist, vorzugsweise nach oben.

Fig. 3 zeigt einen entsprechenden Teillängsschnitt einer Füllmaschine entsprechend eines Ausführungsbeispiels, das im Wesentlichen dem in Fig. 2 gezeigten Ausführungsbeispiel entspricht. Mit 27 ist schematisch die Kammer bzw. der Innenraum der Flügelzellenpumpe gezeigt, die hier durch den Deckel 9 verschlossen ist. Über dem Deckel ist das Schwenkgehäuse 10 angeordnet. In dem Schwenkgehäuse 10 ist die hier nach oben gewandte Inspektionsöffnung 5 vorgesehen. Die Inspektionsöffnung 5 ist hier im oberen Bereich einer Aussparung 13 vorgesehen, die im Schwenkgehäuse 10 ausgebildet ist. Die Aussparung 13 könnte sich auch bis in den Deckel 9 erstrecken. Der Kanal 6 erstreckt sich hier vom Wasserabscheider durch die Gehäusewand 24 der Flügelzellenpumpe, den Deckel 9 und mündet in den unteren Bereich 13b der Aussparung 13. Die Aussparung 13 kann beispielsweise hohlzylindrisch ausgebildet sein, ist aber nicht auf diese Form beschränkt. Es wäre auch möglich, dass bei Ausführungsformen ohne Schwenkgehäuse die Aussparung 13 im Deckel 9 ausgebildet ist und sich die Inspektionsöffnung im oberen Bereich der Aussparung 13 im Deckel befindet. Dies gilt für alle beschriebenen Ausführungsformen.

Die Evakuierungsöffnung 8 ist hier nicht in der Seitenwandung 24 vorgesehen, sondern im Deckel 9. Von der Evakuierungsöffnung 8 erstreckt sich ein weiterer Kanalabschnitt 14 zur Aussparung 13 und mündet ebenfalls in deren unteren Bereich. Gemäß der vorliegenden Erfindung befindet sich nun die Evakuierungsöffnung 8 im Pumpendeckel 9, d. h., dass wie bereits in Zusammenhang mit Fig. 2 erläutert wurde nach oben aus der Flügelzellenpumpe durch den Pumpendeckel 9 abgesaugt wird bzw. die Flügelzellen nach oben hin entlüftet werden. Der Kanal 6 ist also über die Aussparung 13 und dem Abschnitt 14 über die Evakuierungsöffnung 8 mit der Flügelzellenpumpe, d. h. der vorbeilaufenden Flügelzelle 7 verbunden. Wie durch den Pfeil in Fig. 3 hervorgeht, der die Blickrichtung angibt, kann über die Inspektionsöffnung 5 das Innere des Kanals 6 und auch des Sammelbehälters 4 inspiziert werden. Somit kann der Bediener von oben, also von einer Position oberhalb des Deckels 9 und oberhalb des Schwenkgehäuses 10, den Verschmutzungsgrad auf einfache Art und Weise inspizieren, ohne dass der Deckel 9 und Schwenkgehäuse 10 aufgeklappt werden müssen. Auch ein Reinigen des Kanals 6 ist möglich - beispielsweise mit einer Bürste und / oder Reinigungsflüssigkeit, ohne den Deckel 9 und Schwenkgehäuse 10 zu öffnen, so dass es auch nicht notwendig ist, dass der Trichter dabei entleert wird. Vorteilhafterweise ist die Evakuierungsöffnung 8 und der Kanalabschnitt 14 derart angeordnet, dass auch dieser Bereich über die Inspektionsöffnung 5 inspiziert werden kann, ohne dass die Flügelzellenpumpe geöffnet werden muss. Es wäre auch möglich, dass der Kanal 6 und /oder der Kanalabschnitt 14 nicht in den unteren Bereich, hier also den Boden münden, sondern seitlich in die Aussparung unter einem Winkel münden, derart dass von der Inspektionsöffnung aus in den Kanal 6 vorzugsweise bis in den Sammelbehälter und /oder in den Kanalabschnitt 14 vorzugsweise bis zur Evakuierungsöffnung eingesehen werden kann.

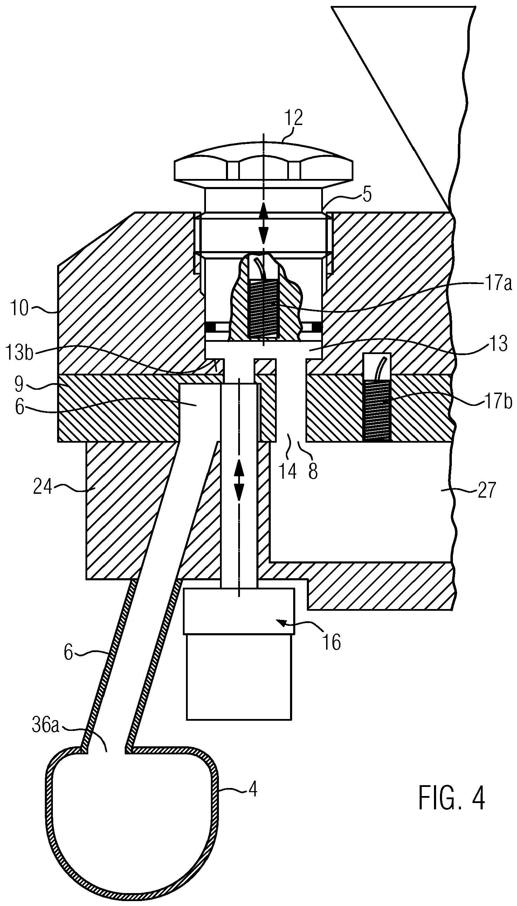

Vorteilhafterweise ist die Inspektionsöffnung 5 verschließbar ausgebildet. Die Inspektionsöffnung kann mit Hilfe eines Verschlusselements 12 verschlossen werden, wie insbesondere aus Fig. 4 hervorgeht, die eine weitere Ausführungsform der vorliegenden Erfindung beschreibt, die im Wesentlichen der in Fig. 3 gezeigten Ausführungsform entspricht. Das Verschlusselement ist hier als axial bewegbarer Kolben 12 ausgebildet. Der axial bewegliche Verschlusskolben ist als Vakuumverschluss ausgebildet und verschließt hier die Inspektionsöffnung 5. Der axial bewegliche Kolben 12 kann beispielsweise manuell in der Aussparung auf und ab bewegt werden, insbesondere durch ein Gewinde.

Wenn der in Fig. 4 gezeigte Kolben 12 noch weiter nach unten in seine unterste Position verfahren wird, kann er entweder den Kanal 6 und/oder den weiteren Kanalabschnitt 14, die beide in die Aussparung 13 münden, verschließen, d. h. den Kanal 6 von dem weiteren Kanalabschnitt 14 abtrennen. Zusätzlich ist hier ein Verschlusszylinder 16 vorgesehen, der den Kanal 6 von der Evakuierungsöffnung 8 trennt, derart, dass es keine Vakuumverbindung mehr zwischen der Vakuumpumpe und dem Förderwerk oder keine Verbindung mehr zwischen Kanal 6 und eventuell geöffneter Inspektionsöffnung 5 gibt. Der Verschlusszylinder 16 befindet sich hier im unteren Bereich des Deckels 9. Ein entsprechender Verschluss kann aber auch von oben oder von der Seite erfolgen. Die Betätigung des Verschlusszylinders kann elektrisch, pneumatisch oder hydraulisch erfolgen. Wesentlich ist lediglich, dass der Verschlusszylinder die Vakuumleitung hier den Kanal 6 verschließt.

In dem Verschlusselement, hier dem Verschlusskolben 12, kann mindestens ein Sensor 17a vorgesehen sein zum Messen des Drucks oder der Temperatur oder des Luftgehalts oder der Dichte der pastösen Masse. Ein solcher Sensor bzw. solche Sensoren 17b können zusätzlich oder alternativ auch im Pumpendeckel 9 oder in der Seitenwand der Flügelzellenpumpe im Vakuum- oder Saugbereich der Flügelzellenpumpe angeordnet sein. Entsprechende Sensorsignale können der Steuerung 22 der Füllmaschine zugeführt werden und dort zur automatischen Prozessüberwachung und Optimierung ausgewertet und verwendet werden.

Ein entsprechender Drucksensor 17a, der einfach zu demontieren und zu reinigen sein kann, kann die Funktion des Evakuierungssystems zwischen Vakuumpumpe 3 und Verschlusskolben wirksam überwachen. Der Sensor 17b ist in der Lage, die realen Druckverhältnisse im Vakuumbereich der Flügelzellenpumpe zu überwachen. Beim Einsatz beider Sensor 17a, 17b ist eine detaillierte Aussage über mögliche Fehler (z. B. Verschluss von Vakuumkanälen) im Evakuierungssystem möglich.

Weicht beispielsweise der vom Sensor 17a gemessene Druck von einem Sollwert ab, so ist dies ebenfalls ein Indiz, dass eine Verunreinigung vorliegt und eine Reinigung notwendig ist.

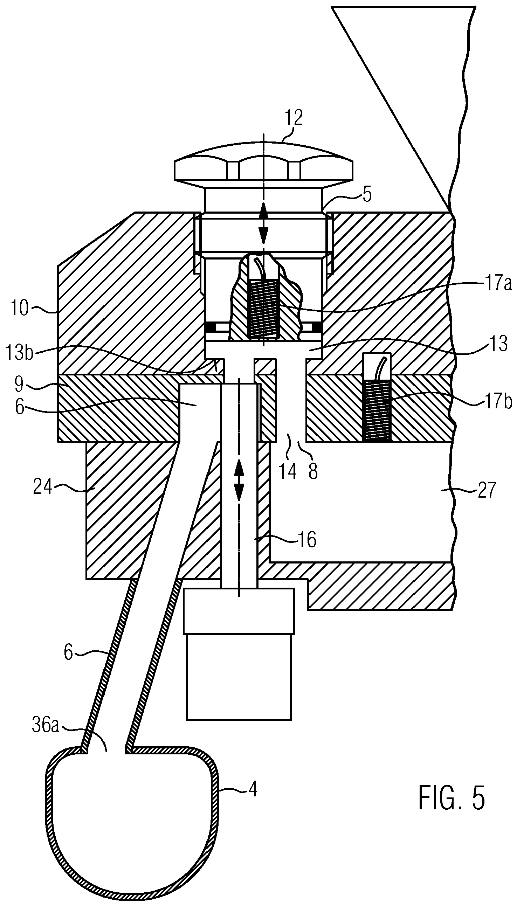

Fig. 5 zeigt das in Fig. 4 gezeigte Ausführungsbeispiel mit geschlossenem Verschlusszylinder 16. Der Verschlusszylinder 16 befindet sich hier in seiner oberen Position, so dass die VakuumVerbindung zwischen Sammelbehälter und Inspektionsöffnung, bzw. Flügelzellenpumpe abgesperrt wird.

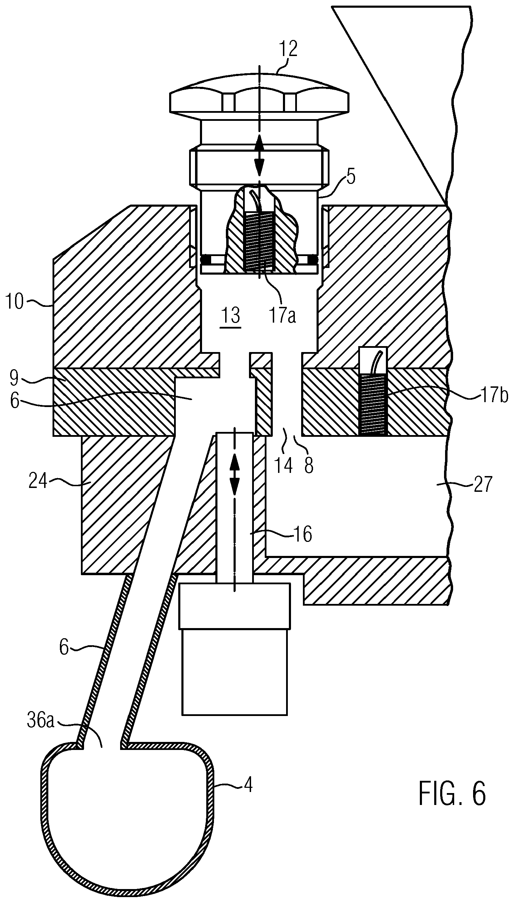

Fig. 6 zeigt die in Fig. 4 und 5 gezeigten Ausführungsbeispiele, wobei hier der Verschlusskolben 12 nach oben bewegt wurde und sich in einer Belüftungsposition befindet. Der Verschlusszylinder gibt hier den Weg vom Kanal 6 in Richtung der Inspektionsöffnung 5 frei.

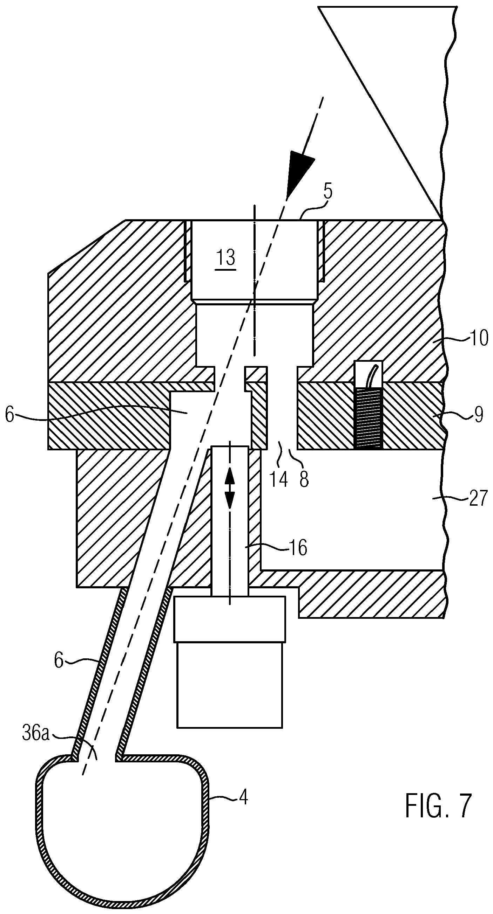

Fig. 7 entspricht dem in Fig. 4 bis 6 gezeigten Ausführungsbeispiel, wobei hier der Verschlusskolben 12 zur Inspektion und Reinigung entnommen worden ist. Wie deutlich aus der Fig. 7 hervorgeht, ist auch hier von oben eine freie Einsehbarkeit von der Inspektionsöffnung 5 durch den Kanal 6 bis zum Sammelbehälter 4 und der Evakuierungsöffnung 8 gegeben. Das heißt, es gibt einen Strahlengang, der die Inspektionsöffnung 5 mit dem Einlass 36a zum Sammelbehälter 4 bzw. mit der Evakuierungsöffnung 8 verbindet. Der Bediener kann somit einfach erkennen, ob der Kanal 6 verschmutzt bzw. verstopft ist und ob der Sammelbehälter 4 zu voll ist. Der Bediener kann auch erkennen ob die Evakuierungsöffnung 8 gereinigt werden muss. Eine Reinigung kann durch die geöffnete Inspektionsöffnung erfolgen.

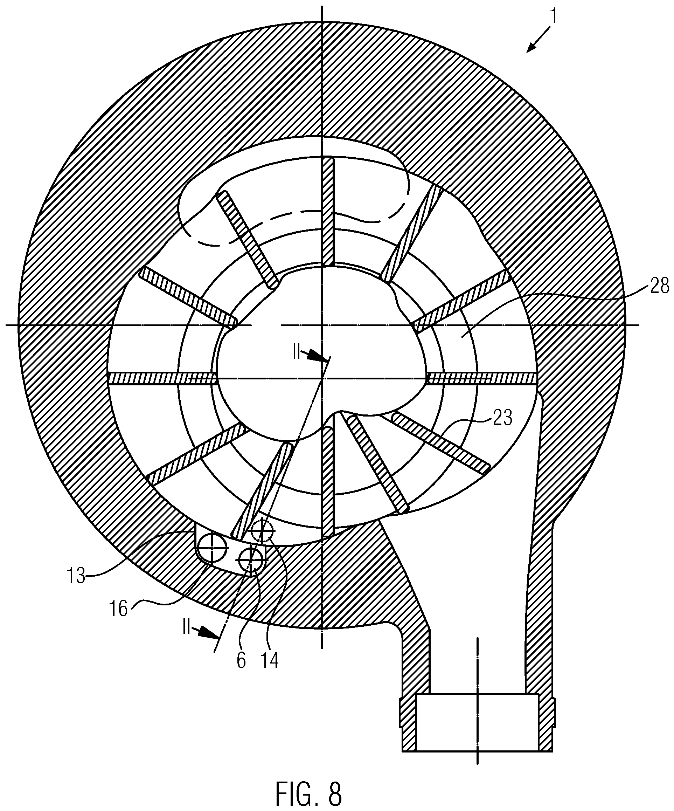

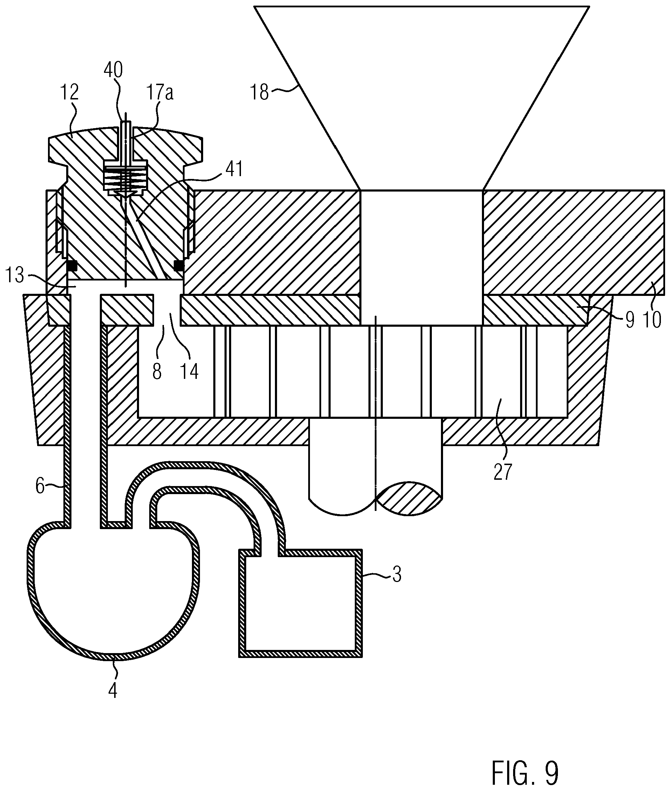

Fig. 8 zeigt einen Querschnitt durch eine Ausführungsform gemäß der vorliegenden Erfindung. Die Fig. 9 entspricht einer Schnittdarstellung entlang der Linie II in Fig. 8. Diese Ausführungsform entspricht im Wesentlichen den vorherigen Ausführungsformen, wobei hier in dem Verschlusselement 12 als Drucksensor ein höhenverstellbarer Stößel 40 vorgesehen ist. Dieser Stößel 40 dient zur optischen Überwachung der Druckverhältnisse.

Dieser Stößel verändert seine vertikale Position in Abhängigkeit des Drucks im Vakuumbereich, d. h. im Saugbereich des Förderwerks und im Kanal 6.

Der Stößel 40 wird durch eine vorgespannte Feder in einer bestimmten Position gehalten (in der der Vakuumbereich nicht verschlossen ist, d.h. der Kanal 41 mit der Außenatmosphäre verbunden ist). Der Sensor 17a ist über eine Leitung 41 mit dem Vakuumsystem verbunden. Bei Unterdruck wird der Stößel 40 in das Verschlusselement hineingezogen und schließt bündig mit dessen Oberfläche ab, d.h. verschließt den Vakuumbereich. Ist das eingestellte Vakuum erreicht ist der Kanal 41 verschlossen. Bei sich erhöhendem Druck wird der Stößel, ähnlich wie bei der Druckanzeige in einem Schnellkochtopf, nach oben geschoben und ragt aus dem Verschlusselement 12 nach oben heraus. Bei Druckabfall tritt der ggfs. z.B. rot markierte Stößel aus dem Verschlusselement heraus.

Über einen Druckanstieg und eine damit verbundene Veränderung der Position des Stößels kann man dann erkennen, dass gegebenenfalls der Kanal 6 und/oder der Sammelbehälter zu stark verschmutzt sind.

Die vorherigen Ausführungsbeispiele in Zusammenhang mit den Fig. 5 bis 12 wurden mit einem axial verstellbaren Kolben als Verschlusselement beschrieben. Es ist jedoch auch möglich, die Inspektionsöffnung lediglich durch ein Schauglas zu verschließen. Dies ermöglicht während des Prozesses, den Kanal und/oder den Sammelbehälter oder aber auch den Kanalabschnitt 14, der zu der Evakuierungsöffnung 8 führt, zu inspizieren.

Bei dem erfindungsgemäßen Verfahren wird die pastöse Masse aus dem Trichter 1 mit der Flügelzellenpumpe 2 in das Füllrohr 19 geschoben. Dabei kann bereits im Trichter ein Vakuum erzeugt werden. In der Flügelzellenpumpe wird im Vakuumbereich, d.h. zwischen einem Dichtbereich (siehe Fig. 11 und Fig.12) und dem Einlass 29 ein Unterdruck in den Flügelzellen 7 erzeugt. Dazu saugt die Vakuumpumpe 3 über eine Vakuumleitung 14,13,6,4,34,35 Luft durch die Evakuierungsöffnung 8, die sich im Deckel 9 befindet. Der Druck in den Flügelzellen soll idealerweise in einem Bereich von 0.-.100 mbar liegen. Der Druck kann dabei beispielsweise über die Sensoren 17a, 17b erfasst werden. Ein zu hoher Druck kann ein Indiz dafür sein, dass eine Reinigung notwendig ist. Über die Inspektionsöffnung 5 kann der Bediener alternativ oder zusätzlich, wie zuvor erläutert, auf einfache Art und Weise erkennen ob eine Reinigung nötig ist und zwar so rechtzeitig, dass es zu keinem unkontrollierten Druckanstieg kommt. Die Reinigung des Kanals 6 oder des Kanalabschnitts14 bzw. der Evakuierungsöffnung kann durch die geöffnete Inspektionsöffnung 5 erfolgen, ohne dass der Deckel 5 der Füllmaschine geöffnet werden muss, d.h. ohne, dass der Trichter entleert werden muss.

## Patentansprüche

1. Füllmaschine (1) zum Abfüllen pastöser Masse, insbesondere zur Wurstherstellung mit
- einer Flügelzellenpumpe (2) zum Fördern der pastösen Masse,
- einer Vakuumpumpe (3) zum Erzeugen eines Unterdrucks in den Flügelzellen (7) der Flügelzellenpumpe (2),
wobei ein Gehäuse der Flügelzellenpumpe (2) eine Evakuierungsöffnung (8) aufweist, über die die Vakuumpumpe (3) die Flügelzellen (7) evakuieren kann,
**dadurch gekennzeichnet, dass**
die Evakuierungsöffnung (8) im Deckel (9) der Flügelzellenpumpe (2) ausgebildet ist.

2. Füllmaschine (1) nach Anspruch 1, **dadurch gekennzeichnet, dass** die Evakuierungsöffnung (8) über eine Vakuumleitung (14, 13, 6, 4, 43,35) mit der Vakuumpumpe (2) verbunden ist.

3. Füllmaschine (1) nach Anspruch 2, **dadurch gekennzeichnet, dass** die Vakuumleitung (14, 13, 6, 4, 43,35) einen Kanalabschnitt (14) im Deckel (9) umfasst, sowie eine Aussparung (13), die im Deckel (9) und/oder in einem Schwenkgehäuse (10), an dem der Deckel (9) befestigt ist, ausgebildet ist, wobei vorzugsweise im oberen Bereich der Aussparung (13) eine Inspektionsöffnung (5) angeordnet ist, durch die die Evakuierungsöffnung (6) und/oder der Kanalabschnitt (14), der in Verbindung mit der Evakuierungsöffnung (8) steht, inspizierbar ist.

4. Füllmaschine (1) nach mindestens Anspruch 2, **dadurch gekennzeichnet, dass** die Vakuumleitung (14, 13, 6, 4, 43,35) einen Kanal (6) aufweist, der mit einem Ende mit einem Sammelbehälter (4) für mitgerissene pastöse Masse verbunden ist und mit seinem anderen Ende in die Aussparung (13), insbesondere deren unteren Bereich mündet.

5. Füllmaschine (1) nach Anspruch 4, **dadurch gekennzeichnet, dass** der Kanal (6) und/oder der Sammelbehälter (4) bei geschlossenem Deckel (9) durch die Inspektionsöffnung (5) inspizierbar sind.

6. Füllmaschine (1) nach mindestens einem der vorhergehenden Ansprüche, **dadurch gekennzeichnet, dass** die Inspektionsöffnung (5) verschließbar ist, insbesondere mit einem Verschlusselement (12), vorzugsweise einem axial beweglichen Kolben (12) und/oder das Verschlusselement (12) ein Schauglas aufweist.

7. Füllmaschine (1) nach mindestens einem der vorhergehenden Ansprüche, **dadurch gekennzeichnet, dass** der axial bewegliche Kolben (12) in der Aussparung (13) axial beweglich ist und in einer unteren Position den Kanal (6) von dem Kanalabschnitt (14) abtrennen kann und/oder
aus der Aussparung (13) entfernt werden kann und/oder
soweit nach oben bewegt werden kann, dass der Kanal (6) und der Kanalabschnitt (14) belüftet werden können.

8. Füllmaschine (1) nach mindestens einem der vorhergehenden Ansprüche, **dadurch gekennzeichnet, dass** ein angetriebener Verschlusszylinder (16) vorgesehen ist, der die Vakuumverbindung zwischen der Vakuumpumpe und der Flügelzellenpumpe trennt.

9. Füllmaschine (1) nach mindestens einem der vorhergehenden Ansprüche, **dadurch gekennzeichnet, dass** im Verschlusselement (12) und/oder in dem Deckel (9) der Flügelzellenpumpe (2) ein Sensor (17) integriert ist, insbesondere zum Messen der Temperatur und/oder des Drucks oder ein optischer Sensor, der den Kanal (6) und/oder den Sammelbehälter (4) und/oder den Kanalabschnitt (14) und/oder die Evakuierungsöffnung (8) optisch erfasst und auf einem Display darstellt.

10. Füllmaschine (1) nach Anspruch 9, **dadurch gekennzeichnet, dass** der Sensor (17) ein Drucksensor ist, der ein in Abhängigkeit des Drucks in den Flügelzellenkammern (17) bewegliches Anzeigeelement (40) umfasst.

11. Füllmaschine (1) nach Anspruch 10, **dadurch gekennzeichnet, dass** das Anzeigeelement (40), insbesondere ein höhenverstellbarer Stößel, im oberen Bereich eines Kanals (41) in dem Verschlusselement (12) angeordnet ist und durch eine Feder in einer vorbestimmten vertikalen Position gehalten wird, wobei sich das Anzeigeelement (40) bei sinkendem Druck in den Flügelzellenkammern (7) gegen die Federkraft nach unten bewegen kann.

12. Füllmaschine (1) nach mindestens einem der vorhergehenden Ansprüche, **dadurch gekennzeichnet, dass** der Vakuumkanal in einem Bereich zwischen dem Deckel (9) und dem Schwenkgehäuse (10) abgedichtet ist.

13. Verfahren zum Abfüllen pastöser Masse mit einer Füllmaschine (1) nach mindestens einem der Ansprüche 1 bis 12, wobei die pastöse Masse mit der Flügelzellenpumpe (2) gefördert wird und mit der Vakuumpumpe (3) ein Unterdruck in den Flügelzellen (7) der Flügelzellenpumpe (2) erzeugt wird, **dadurch gekennzeichnet, dass** die Flügelzellen (7) über eine Evakuierungsöffnung (8) im Deckel (9) des Gehäuses der Flügelzellenpumpe (2) evakuiert werden.

14. Füllmaschine (1) nach mindestens einem der Ansprüche 1-12, **dadurch gekennzeichnet, dass** in der zum Pumpeninnraum gewandten ebenen Fläche des Deckels (9) eine nutförmige Vertiefung (80) im Vakuumbereich ausgebildet ist und die Evakuierungsöffung außerhalb der Vertiefung (80) im Vakuumbereich angeordnet ist.

## Claims

1. Filling machine (1) for filling a pasty mass, in particular for the production of sausages with
- a vane cell pump (2) for conveying said pasty mass,
- a vacuum pump (3) for generating negative pressure in the vane cells (7) of said vane cell pump (2),
where a housing of said vane cell pump (2) comprises an evacuation opening (8) via which said vacuum pump (3) can evacuate said vane cells (7),
**characterized in that**
said evacuation opening (8) is formed in the cover (9) of said vane cell pump (2).

2. Filling machine (1) according to claim 1, **characterized in that** said evacuation opening (8) is via a vacuum line (14, 13, 6, 4, 43, 35) in communication with said vacuum pump (2).

3. Filling machine (1) according to claim 2, **characterized in that** said vacuum line (14, 13, 6, 4, 43, 35) comprises a channel section (14) in said cover (9) and a recess (13) formed in said cover (9) and/or in a pivot housing (10) on which said the cover (9) is mounted, where an inspection opening (5) is arranged preferably in the upper region of said recess (13) through which said evacuation opening (6) and/or said channel section (14) being in communication with said evacuation opening (8) is inspectable.

4. Filling machine (1) according to at least claim 2, **characterized in that** said vacuum line (14, 13, 6, 4, 43, 35) comprises a channel (6) which is with one end in communication with a collection container (4) for pasty mass that is dragged along and with its other end opens into said recess (13), in particular, into the latter's lower region.

5. Filling machine (1) according to claim 4, **characterized in that** said channel (6) and/or said collection container (4) can be inspected through said inspection opening (5) while said cover (9) is closed.

6. Filling machine (1) according to at least one of the preceding claims, **characterized in that** said inspection opening (5) is closable, in particular with a closure element (12), preferably an axially movable piston (12) and/or said closure element (12) comprises an inspection glass.

7. Filling machine (1) according to at least one of the preceding claims, **characterized in that** said axially movable piston (12) is axially movable in said recess (13) and can in a lower position separate said channel (6) from said channel section (14) and/or
can be removed from said recess (13) and/or
can be moved so far upwardly that said channel (6) and said channel section (14) can be vented.

8. Filling machine (1) according to at least one of the preceding claims, **characterized in that** a driven closure cylinder (16) is provided which separates the vacuum connection between said vacuum pump and said vane cell pump.

9. Filling machine (1) according to at least one of the preceding claims, **characterized in that** a sensor (17) is integrated into said closure element (12) and/or into said cover (9) of said vane cell pump (2), in particular for measuring the temperature and/or pressure, or an optical sensor which optically detects said channel (6) and/or said collection container (4) and/or said channel section (14) and/or said evacuation opening (8) and illustrates this on a display.

10. Filling machine (1) according to claim 9, **characterized in that** said sensor (17) is a pressure sensor which comprises a display element (40) which is movable in dependence of the pressure in said vane chambers (17).

11. Filling machine (1) according to claim 10, **characterized in that** said display element (40), in particular a slide adjustable in height, is disposed in the upper region of a channel (41) in said closure element (12) and is by a spring held in a predetermined vertical position, where said display element (40) can with decreasing pressure in said vane cell chambers (7) move downwardly against the spring force.

12. Filling machine (1) according to at least one of the preceding claims, **characterized in that** said vacuum channel is sealed in a region between said cover (9) and said pivot housing (10).

13. Method for filling a pasty mass with a filling machine (1) according to at least one of the claims 1 to 12, where said pasty mass is conveyed with said vane cell pump (2) and a negative pressure in said vane cells (7) of said vane cell pump (2) is generated with said vacuum pump (3), **characterized in that** said vane cells (7) are evacuated via an evacuation opening (8) in said cover (9) of said housing of said vane cell pump (2).

14. Filling machine (1) according to at least one of the claims 1-12, **characterized in that** a groove-shaped depression (80) in the vacuum region is formed in the flat surface of said cover (9) facing the pump interior and said evacuation opening is disposed outside said depression (80) in said vacuum region.

## Revendications

1. Machine de remplissage (1) destinée à assurer le conditionnement par remplissage d'une masse pâteuse, notamment pour la fabrication de saucisses, comprenant
- une pompe à palettes (2) pour assurer le transport de la masse pâteuse,
- une pompe à vide (3) pour produire une dépression dans les cellules de palettes (7) de la pompe à palettes (2),
un carter de la pompe à palettes (2) présentant une ouverture de mise sous vide (8), par l'intermédiaire de laquelle la pompe à vide (3) peut produire un vide dans les cellules de palettes (7),
**caractérisée en ce que**
l'ouverture de mise sous vide (8) est formée dans le couvercle (9) de la pompe à palettes (2).

2. Machine de remplissage (1) selon la revendication 1, **caractérisée en ce que** l'ouverture de mise sous vide (8) est reliée à la pompe à palettes (2), par l'intermédiaire d'une conduite de vide (14, 13, 6, 4, 43, 35).

3. Machine de remplissage (1) selon la revendication 2, **caractérisée en ce que** la conduite de vide (14, 13, 6, 4, 43, 35) comprend un tronçon de canal (14) dans le couvercle (9), ainsi qu'un évidement (13), qui est formé dans le couvercle (9) et/ou dans un carter de pivotement (10) sur lequel est fixé le couvercle (9), et **en ce que** de préférence dans la zone supérieure de l'évidement (13) est agencée une ouverture d'inspection (5), à travers laquelle il est possible d'inspecter l'ouverture de mise sous vide (8) et/ou le tronçon de canal (14), qui est liaison avec l'ouverture de mise sous vide (8).

4. Machine de remplissage (1) selon au moins la revendication 2, **caractérisée en ce que** la conduite de vide (14, 13, 6, 4, 43, 35) comprend un canal (6) qui est relié, par une extrémité, à un récipient de collecte (4) pour de la masse pâteuse ayant été entraînée, et qui débouche avec son autre extrémité, dans l'évidement (13), notamment dans sa zone inférieure.

5. Machine de remplissage (1) selon la revendication 4, **caractérisée en ce que** le canal (6) et/ou le récipient de collecte (4) peuvent être inspectés, lorsque le couvercle (9) est fermé, à travers l'ouverture d'inspection (5).

6. Machine de remplissage (1) selon l'une au moins des revendications précédentes, **caractérisée en ce que** l'ouverture d'inspection (5) peut être fermée, notamment à l'aide d'un élément de fermeture (12), de préférence un piston (12) axialement mobile, et/ou l'élément de fermeture (12) présente une jauge de visualisation.

7. Machine de remplissage (1) selon l'une au moins des revendications précédentes, **caractérisée en ce que** le piston (12) axialement mobile est mobile axialement dans l'évidement (13) et peut, dans une position inférieure, séparer le canal (6) du tronçon de canal (14), et/ou
être retiré de l'évidement (13), et/ou
être déplacé vers le haut jusqu'à permettre la purge d'air du canal (6) et du tronçon de canal (14).

8. Machine de remplissage (1) selon l'une au moins des revendications précédentes, **caractérisée en ce qu'**il est prévu un cylindre de fermeture entraîné (16), qui assure le sectionnement de la liaison de vide entre la pompe à vide et la pompe à palettes.

9. Machine de remplissage (1) selon l'une au moins des revendications précédentes, **caractérisée en ce que** dans l'élément de fermeture (12) et/ou dans le couvercle (9) de la pompe à palettes (2) est intégré un capteur (17), notamment destiné à mesurer la température et/ou la pression, ou bien un capteur optique, qui assure un relevé optique du canal (6) et/ou du récipient de collecte (4) et/ou du tronçon de canal (14) et/ou de l'ouverture de mise sous vide (8), et sa représentation sur un écran.

10. Machine de remplissage (1) selon la revendication 9, **caractérisée en ce que** le capteur (17) est un capteur de pression, qui comporte un élément de visualisation (40) mobile en fonction de la pression dans les chambres de cellules de palettes (17).

11. Machine de remplissage (1) selon la revendication 10, **caractérisée en ce que** l'élément de visualisation (40), notamment un poussoir déplaçable en hauteur, est agencé dans la zone supérieure d'un canal (41) dans l'élément de fermeture (12), et est maintenu par un ressort dans une position verticale prédéterminée, l'élément de visualisation (40) pouvant se déplacer vers le bas à l'encontre de la force de ressort lorsque la pression chute dans les chambres de cellules de palettes (17).

12. Machine de remplissage (1) selon l'une au moins des revendications précédentes, **caractérisée en ce que** le canal de vide est rendu étanche dans une zone entre le couvercle (9) et le carter de pivotement (10).

13. Procédé pour assurer le conditionnement par remplissage d'une masse pâteuse à l'aide d'une machine de remplissage (1) selon l'une au moins des revendications 1 à 12, la masse pâteuse étant transportée par la pompe à palettes (2), et une dépression étant produite dans les cellules de palettes (7) de la pompe à palettes (2) au moyen de la pompe à vide (3), **caractérisé en ce que** l'on produit un vide dans les cellules de palettes (7) par l'intermédiaire d'une ouverture de mise sous vide (8) dans le couvercle (9) du carter de la pompe à palettes (2).

14. Machine de remplissage (1) selon l'une au moins des revendications 1 - 12, **caractérisée en ce que** dans la surface plane du couvercle (9), qui est dirigée vers l'espace intérieur de la pompe, est agencé un creux (80) en forme de rainure dans la zone de vide, et l'ouverture de mise sous vide (8) est agencée en-dehors du creux (80) dans la zone de vide.
